# EUROPÄISCHE PATENTSCHRIFT

(11) **EP 3 540 211 B1**
(45) Veröffentlichungstag und Bekanntmachung des Hinweises auf die Patenterteilung: **10.11.2021**
(21) Anmeldenummer: 18161546.9
(22) Anmeldetag: 13.03.2018
(51) Int. Cl.: F03D 1/06

(54) **VORTEX-GENERATOR ZUR BEFESTIGUNG AN EINEM WINDENERGIEANLAGENROTORBLATT**
VORTEX GENERATOR FOR ATTACHMENT TO A WIND ENERGY ASSEMBLY ROTOR BLADE
GÉNÉRATEUR DE VORTEX DESTINÉ À ÊTRE FIXÉ À UNE PALE DE ROTOR D'UNE ÉOLIENNE

(43) Veröffentlichungstag der Anmeldung: 18.09.2019
(73) Patentinhaber: Nordex Energy SE & Co. KG, 22419 Hamburg (DE)
(72) Erfinder: Doosttalab, Mehdi, 22850 Norderstedt (DE); Rautmann, Christof, 22419 Hamburg (DE); Lipka, Thomas, 18055 Rostock (DE); Rindt, Philipp, 18057 Rostock (DE)
(74) Vertreter: Hauck Patentanwaltspartnerschaft mbB

(56) Entgegenhaltungen:
- WO-A1-2015/030573
- WO-A2-2013/014082
- CN-U- 207 420 779
- US-A1- 2012 151 769

## Beschreibung

Die Erfindung betrifft einen Vortex-Generator zur Befestigung an einem Windenergieanlagenrotorblatt. Vortex-Generatoren, gelegentlich auch als Wirbelerzeuger bezeichnet, werden bei Windenergieanlagenrotorblättern für eine gezielte Beeinflussung der Strömungsverhältnisse eingesetzt. Sie weisen zwei in einem Abstand voneinander angeordnete Finnen auf, die jeweils von der Oberfläche des Rotorblatts in eine Grenzschicht der Strömung hineinragen und die in einem Winkel zur Anströmrichtung ausgerichtet sind. Sind diese Finnen im Betrieb des Rotorblatts der anströmenden Luft ausgesetzt, führt dies zur Ausbildung von energiereichen Wirbeln und stromabwärts des Vortex-Generators zu einer turbulenten Grenzschicht. Insbesondere im Blattwurzelbereich hat es sich in vielen Fällen als sinnvoll herausgestellt, diesen Effekt zur Vermeidung oder Verzögerung von Strömungsablösungen einzusetzen. Hierzu müssen die Vortex-Generatoren an geeigneten Positionen auf der Blattoberfläche befestigt werden. Dies geschieht in der Regel durch Aufkleben.

Diese Befestigung begegnet erheblichen Schwierigkeiten. Grundsätzlich bestehen hohe Anforderungen an die Qualität der Befestigung, denn im Betrieb sind die Rotorblätter von Windenergieanlagen jahrelang Wind und Wetter ausgesetzt und für Wartungs- und Reparaturarbeiten schwer zugänglich. Hinzu kommt, dass die Oberfläche der Rotorblätter eine Krümmung aufweist, die sich sowohl in Richtung der Blatttiefe, also von der Profilnasenkante zur Profilendkante hin, als auch in Längsrichtung des Rotorblatts, also von der Blattwurzel zur Blattspitze hin, fortwährend ändert.

Eine individuelle Anpassung der Befestigungsfläche jedes Vortex-Generators an die an der Position seiner vorgesehenen Befestigung bestehende Krümmung der Oberfläche des Rotorblatts ist nicht praktikabel. Darum wird für die Befestigungsflächen der Vortex-Generatoren eine ebene Fläche oder eine Fläche mit einer mittleren Krümmung gewählt. Die unvermeidlichen Spalte müssen mit Klebstoff aufgefüllt werden. Hierfür ist ein relativ dünnflüssiger Klebstoff erforderlich, der eine geringe Anfangshaftung aufweist, sodass jeder Vortex-Generator fixiert werden muss, bis der Klebstoff eine ausreichende Haftung bietet. Klebebänder stellen keine geeignete Alternative dar, da sie zum Ausgleich unterschiedlicher Spaltmaße nur sehr bedingt geeignet sind. Die Montage der Vortex-Generatoren ist daher aufwendig und fehleranfällig. In der Praxis ist immer wieder zu beobachten, dass sich einzelne Vortex-Generatoren von der Oberfläche lösen und schließlich abfallen.

Aus der Druckschrift EP 2 484 898 B1 sind Vortex-Generatoren bekannt geworden, die eine gekrümmte Befestigungsfläche zum Aufkleben auf die Oberfläche eines Windenergieanlagenrotorblatts aufweisen. Die Befestigungsfläche umfasst eine großflächige Aussparung, in der der Klebstoff angeordnet werden soll, und einen umlaufenden Rand, der die Klebstoffschicht vor äußeren Einflüssen schützen soll.

Aus der Druckschrift EP 2 799 709 B1 ist bekannt geworden, Vortex-Generatoren mit einer Klebstoffschicht an einer Oberfläche eines Windenergieanlagenrotorblatts zu befestigen. Die Klebstoffschicht soll ein niedriges Schermodul aufweisen, um eine Ablösung der Vortex-Generatoren bei einer Verformung des Rotorblatts zu vermeiden.

Aus der Druckschrift EP 2 826 708 B1 sind Vortex-Generatoren bekannt geworden, die mit Klebebändern an einer Oberfläche eines Windenergieanlagenrotorblatts befestigt werden. Die Vortex-Generatoren sollen flexibel sein, damit sich eine Befestigungsfläche der Vortex-Generatoren an die Kontur des Rotorblatts anpassen kann.

Aus der Druckschrift WO 2015/030573 A1 sind Vortex-Generatoren mit zwei Finnen bekannt geworden, die über eine Grundplatte miteinander verbunden sind. Die Finnen weisen eine leichte Krümmung auf, was eine Flexibilität der Grundplatte erhöhen und eine Anpassung der Grundplatte an unterschiedliche Krümmungen der Oberfläche des Rotorblatts ermöglichen soll. Außerdem wird vorgeschlagen, die Grundplatte U-, V-, oder W-förmig auszubilden. Diese Maßnahme soll eine thermische Ausdehnung ermöglichen und zugleich aerodynamisch vorteilhaft sein.

Davon ausgehend ist es die Aufgabe der Erfindung, einen Vortex-Generator zur Verfügung zu stellen, der besonders einfach und zuverlässig an einer Oberfläche eines Windenergieanlagenrotorblatts befestigt werden kann.

Diese Aufgabe wird gelöst durch den Vortex-Generator mit den Merkmalen des Anspruchs 1. Vorteilhafte Ausgestaltungen sind in den Unteransprüchen angegeben.

Der Vortex-Generator hat eine Längsrichtung, zwei Finnen, die jeweils in einem Winkel zu der Längsrichtung angeordnet sind und sich in der Längsrichtung über eine erste Länge erstrecken, und eine Basis, die die beiden Finnen miteinander verbindet, wobei die Basis eine Breite aufweist und sich in der Längsrichtung über eine zweite Länge erstreckt, wobei über die gesamte Breite der Basis die zweite Länge kleiner ist als die erste Länge.

Die Längsrichtung entspricht einer Auslegungsanströmrichtung, also derjenigen Richtung, in der der Vortex-Generator im regulären Betrieb von der anströmenden Luft angeströmt wird. Ist der Vortex-Generator an der Oberfläche eines Windenergieanlagenrotorblatts befestigt, liegt die Längsrichtung in einer Profilebene des Rotorblatts. Die zu einer Profilnasenkante des Rotorblatts weisende Richtung wird als vorn, die zu einer Profilendkante weisende Richtung wird als hinten bezeichnet. In ähnlicher Weise bezieht sich die Angabe unten auf die zu der Oberfläche des Rotorblatts weisende Richtung und die Angabe oben auf die sich von dieser Oberfläche entfernende Richtung.

Die Finnen erstrecken sich ausgehend von der Basis nach oben, insbesondere etwa orthogonal zur Oberfläche des Windenergieanlagenrotorblatts. Sie können jedoch auch davon abweichend mehr oder weniger stark geneigt zu der Oberfläche angeordnet sein. Die Finnen weisen eine Höhe auf, die an die Dicke einer Grenzschicht der Strömung angepasst sein kann. Insbesondere kann die Höhe etwas größer sein als die Dicke der Grenzschicht. Die Finnen können über ihre gesamte Länge eine gleichmäßige Höhe aufweisen. Alternativ kann die Höhe über die Längsrichtung variieren. Gebräuchlich sind insbesondere Vortex-Generatoren, deren Höhe an einem vorderen Ende geringer ist als einem hinteren Ende. In diesem Fall können die Finnen im Wesentlichen trapezförmig bzw. dreieckig ausgebildet sein. Abweichungen davon sind möglich, sowohl mit gekrümmt verlaufenden Vorder-, Hinter-, Ober- und/oder Unterkanten, als auch mit mehr oder weniger stark abgerundeten Ecken.

Eine Fläche, in der die betreffende Finne angeordnet ist, kann eben oder leicht gekrümmt sein. Beide Finnen sind in einem Winkel zu der Längsrichtung angeordnet. Dieser Winkel kann beispielsweise im Bereich von 5° bis 45° liegen, sodass die beiden Finnen relativ zueinander in einem Winkel im Bereich von 10° bis 90° ausgerichtet sind. Die beiden Finnen können insbesondere spiegelsymmetrisch zu einer in der Längsrichtung ausgerichteten Längsachse des Vortex-Generators angeordnet sein.

Eine Besonderheit der Erfindung besteht darin, dass über die gesamte Breite der Basis die zweite Länge kleiner ist als die erste Länge, dass sich mit anderen Worten die Basis also in Strömungsrichtung nicht über die gesamte Länge der Finnen erstreckt. Mit der Erstreckung der Basis in der Längsrichtung ist die gesamte Ausdehnung der Basis in dieser Richtung gemeint, also von einem in Strömungsrichtung am weitesten vorn befindlichen Punkt der Basis bis zu einem am weitesten hinten befindlichen Punkt der Basis. Beispielsweise kann die Basis streifenförmig ausgebildet sein mit parallel angeordneten Vorder- und Hinterkanten. In diesem Fall entspricht der Abstand zwischen der Vorderkante und der Hinterkante der Basis der zweiten Länge. Quer zu der Längsrichtung weist die Basis eine Breite auf, die sich von der einen Finne bis zu der anderen Finne erstreckt. Wegen der Winkelstellung der Finnen kann die Basis bei auf die Oberfläche gerichteter Blickrichtung insbesondere trapezförmig ausgebildet sein. Alternativ kann die Basis auch seitlich über die Finnen überstehen.

Typische Abmessungen des gesamten Vortex-Generators liegen beispielsweise in einem Bereich zwischen einer Länge von 2 cm und einer Breite von 1,5 cm bis zu einer Länge von 25 cm und einer Breite von 20 cm, wobei die Höhe der Finnen beispielsweise in einem Bereich zwischen 20 % und 100 % der Länge liegen kann. Die Basis oder der gesamte Vortex-Generator kann aus einem relativ steifen, unflexiblen Material wie beispielsweise Metall bestehen. Ein Faserverbundmaterial stellt eine Alternative dar. Der Vortex-Generator kann einteilig gefertigt oder aus mehreren Elementen zusammengesetzt sein.

Die Erfindung macht sich zunutze, dass bei Windenergieanlagenrotorblättern die positionsabhängige Änderung der Krümmung der Oberfläche in der Längsrichtung besonders ausgeprägt ist. Durch das vorgesehene Verkürzen der Länge der Basis in dieser Längsrichtung verringern sich die zwischen der Befestigungsfläche und der Oberfläche des Rotorblatts auftretenden Spaltmaße. Die Erfinder haben erkannt, dass die auftretenden Spaltmaße bei einer hinreichend kurzen Basis so weit verkleinert werden können, dass sie zum Beispiel durch die Elastizität eines doppelseitigen Klebebands ausgeglichen werden können. Beispielsweise können Klebebänder mit einer Stärke von 1,5 mm eingesetzt werden, die aufgrund ihrer Elastizität einen Ausgleich bis zu etwa 25 % ihrer Dicke herbeiführen können. Wird die Basis soweit verkürzt, dass sich die Größe der an den unterschiedlichen Befestigungspositionen auftretenden Spalte um nicht mehr als etwa 0,375 mm ändert, ist demnach eine zuverlässige und besonders einfache Befestigung mit einem solchen Klebeband möglich. Vorteile ergeben sich jedoch auch bei Verwendung anderer Klebstoffe.

Bei der Erfindung beträgt die zweite Länge höchstens 70 % der ersten Länge. Die zweite Länge kann auch höchstens 50 %, höchstens 40 %, höchstens 30 % oder höchstens 20 % der ersten Länge betragen. Durch diese Maßnahme ist eine weitere Verringerung der auftretenden Spaltmaße möglich, sodass eine zuverlässige Befestigung auch bei großen Vortex-Generatoren gelingt. Versuche haben gezeigt, dass die Größe der verbleibenden Befestigungsfläche trotz der Verkürzung in vielen Fällen ausreichend ist.

In einer Ausgestaltung weist die Basis eine Befestigungsfläche zur Verklebung mit einer Oberfläche eines Windenergieanlagenrotorblatts auf. Die Befestigungsfläche befindet sich an einer Unterseite der Basis. Die Befestigungsfläche kann sich wahlweise über die gesamte Unterseite der Basis erstrecken oder über einen Teil davon, insbesondere über einen Großteil der Gesamtfläche der Unterseite der Basis. Außerdem kann die Befestigungsfläche eine aktivierte Oberfläche aufweisen, um eine besonders sichere Verbindung mit dem Klebstoff zu gewährleisten.

In einer Ausgestaltung weist die Befestigungsfläche in der Längsrichtung eine Krümmung auf. Grundsätzlich kann die Befestigungsfläche auch eben sein. Eine insbesondere konkave Krümmung erlaubt jedoch eine weitere Verringerung der auftretenden Spaltmaße, insbesondere wenn sie an eine mittlere Krümmung der Oberfläche des Windenergieanlagenrotorblatts angepasst ist.

In einer Ausgestaltung weisen die Finnen jeweils einen mittleren Längsabschnitt auf, dessen untere Kante mit der Basis verbunden ist, sowie einen vorderen Längsabschnitt, der in der Längsrichtung vor der Basis angeordnet ist, und ein hinteren Längsabschnitt, der in der Längsrichtung hinter der Basis angeordnet ist. In diesem Fall sind der vordere Längsabschnitt und der hintere Längsabschnitt nicht unmittelbar mit der Basis verbunden. Die Basis befindet sich jedoch in einer mittleren Position und die Finnen sind über ihre gesamte Länge hinreichend fixiert. Eine Befestigung des vorderen Längsabschnitts oder des hinteren Längsabschnitts an der Oberfläche des Rotorblatts ist bei der Erfindung nicht erforderlich und auch nicht vorgesehen. Davon unabhängig kann eine Versiegelung des Freiraums zwischen den genannten Längsabschnitten und der Oberfläche des Rotorblatts sinnvoll sein.

In einer Ausgestaltung ist der vordere Längsabschnitt in einer Ebene angeordnet und weist eine untere Kante auf, die nach unten über die Basis übersteht und/oder der hintere Längsabschnitt ist in einer Ebene angeordnet und weist eine untere Kante auf, die nach unten über die Basis übersteht. Insbesondere bei stark gekrümmten Oberflächen kann auf diese Weise der Abstand zwischen den unteren Kanten der Finnen und der Oberfläche des Rotorblatts verringert werden, was aerodynamisch vorteilhaft sein kann.

In einer Ausgestaltung ist die untere Kante des vorderen Längsabschnitts und/oder die untere Kante des hinteren Längsabschnitts gekrümmt. Insbesondere können diese Kanten an eine mittlere Krümmung oder an eine minimale Krümmung der Oberfläche des Windenergieanlagenrotorblatts angepasst sein. Die Krümmung kann zu einem geringen Abstand zwischen Finne und Oberfläche beitragen.

In einer Ausgestaltung weist ein vorderer Längsabschnitt und/oder ein hinterer Längsabschnitt einer Finne an seiner unteren Kante einen abgewinkelten Randabschnitt auf. Der Randabschnitt kann aus einer Ebene, in der der Längsabschnitt angeordnet ist, herausstehen. Insbesondere kann er sich von der Kante nach außen, also von der anderen Finne weg, oder nach innen, als zu der anderen Finne hin, erstrecken. Der abgewinkelte Randabschnitt bewirkt eine Versteifung der Finne und kann Vibrationen entgegenwirken.

In einer Ausgestaltung ist der Vortex-Generator durch Ausstanzen eines Flachmaterials und anschließendes Abwinkeln der beiden Finnen relativ zu der Basis hergestellt. Diese Art der Fertigung ist besonders einfach. Durch das Abwinkeln wird eine hohe Formstabilität erreicht. Das Flachmaterial kann insbesondere ein Blech sein, beispielsweise aus Aluminium oder Stahl, insbesondere Edelstahl. Das Flachmaterial kann eine gleichmäßige Dicke aufweisen, beispielsweise im Bereich von 0,3 mm bis 3 mm. Wahlweise können die bereits erwähnten Randabschnitte an den unteren Kanten vorderer und/oder hinterer Längsabschnitte der Finnen ebenfalls durch einfaches Abwinkeln geformt werden.

In einer Ausgestaltung ist ein doppelseitiges Klebeband auf die Befestigungsfläche aufgeklebt. Das Klebeband kann eine elastische Schicht aufweisen, insbesondere aus Schaumstoff und/oder mit einer Dicke von beispielsweise 1 mm oder mehr. Dies ermöglicht den bereits erläuterten Ausgleich von unterschiedlichen Spaltmaßen. Der Vortex-Generator kann ohne weitere Vorarbeiten besonders einfach auf die Oberfläche eines Windenergieanlagenrotorblatts aufgeklebt werden.

In einer Ausgestaltung erstreckt sich das doppelseitige Klebeband über die gesamte Breite der Befestigungsfläche bzw. der Basis und/oder über die gesamte zweite Länge. Dies ermöglicht eine vollflächige Verklebung.

In einer Ausgestaltung ist ein Vortex-Generator nach einem der Ansprüche 1 bis 11 mit einem Windenergieanlagenrotorblatt kombiniert, wobei die Befestigungsfläche des Vortex-Generators mit einer Oberfläche des Windenergieanlagenrotorblatts verklebt ist. Die Verklebung kann insbesondere mit einem doppelseitigen Klebeband hergestellt sein.

In einer Ausgestaltung ist zwischen der Oberfläche und an die Oberfläche angrenzenden Kanten des Vortex-Generators eine Versiegelung angeordnet. Die Versiegelung kann beispielsweise mit einer Dichtmasse, etwa einem Silikonwerkstoff, ausgeführt sein. Sie kann um die Befestigungsfläche umlaufen und/oder zwischen unteren Kanten der Finnen und der Oberfläche angeordnet sein. Durch die Versiegelung wird einerseits die Verklebung vor äußeren Einflüssen geschützt. Andererseits kann einer Ansammlung von Verschmutzungen vorgebeugt werden. Weiterhin führt die Versiegelung zu einer optimalen aerodynamischen Form.

In einer Ausgestaltung sind mehrere, identisch geformte Vortex-Generatoren an verschiedenen Positionen der Oberfläche, an denen die Oberfläche unterschiedliche Krümmungen aufweist, mit der Oberfläche verklebt. Eine individuelle Anpassung der Geometrie der Vortex-Generatoren an unterschiedlich stark gekrümmte Oberflächen ist bei der Erfindung nicht notwendig.

Nachfolgend wird die Erfindung anhand von in Figuren dargestellten Ausführungsbeispielen näher erläutert. Es zeigen:
- Figur 1: ein Windenergieanlagenrotorblatt mit Vortex-Generatoren
- Figuren 2-6: jeweils ein Ausführungsbeispiel eines Vortex-Generators, im linken Teil der Figur in einer Ansicht von der Seite und im rechten Teil der Figur in einer Ansicht von oben;
- Figuren 7 und 8: jeweils ein Stanzteil zur Herstellung eines Vortex-Generators in einer Draufsicht.

Alle Figuren sind schematisch. Ein Pfeil kennzeichnet in jeder Figur die der Auslegungsanströmrichtung entsprechende Längsrichtung 12.

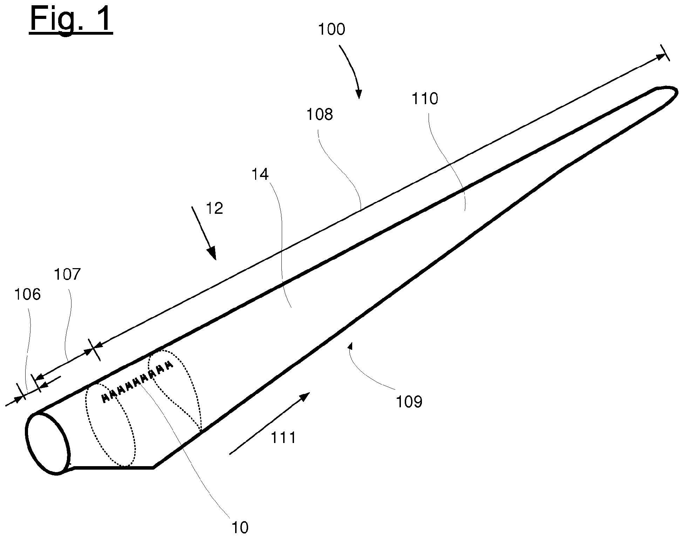

Figur 1 zeigt ein exemplarisches Windenergieanlagenrotorblatt 100, welches einen Rotorblattwurzelbereich 106 mit einem im Wesentlichen kreisrunden Querschnitt, einen Übergangsbereich 107 und ein Profilbereich 108 aufweist. Das Windenergieanlagenrotorblatt 100 hat bezüglich einer Längserstreckungsrichtung 111 eine Druckseite 109 und eine gegenüberliegende Saugseite 110. Das Rotorblatt 100 ist im Inneren im Wesentlichen hohl ausgebildet. Auf einer Oberfläche 14 der Saugseite 110 weist das Rotorblatt 100 eine Reihe Vortex-Generatoren 10 auf.

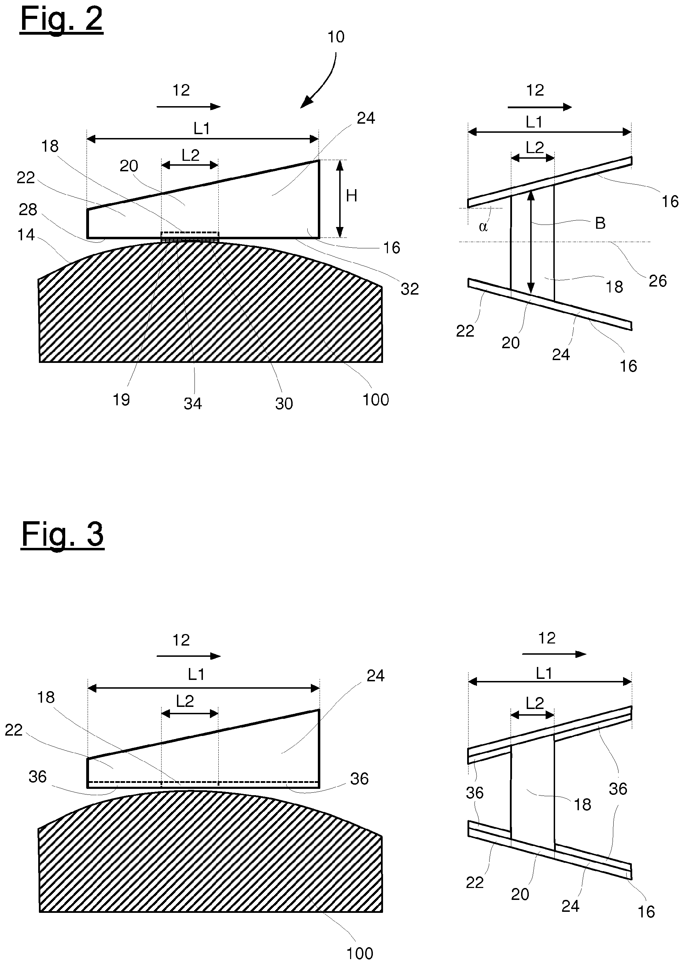

Der Vortex-Generator 10 aus Fig. 2 ist an einer Oberfläche 14 eines ausschnittsweise im Querschnitt entlang einer Profilebene dargestellten Windenergieanlagenrotorblatts 100 befestigt. Er weist zwei Finnen 16 und eine Basis 18 auf. Die Finnen 16 erstrecken sich in der Längsrichtung 12 jeweils über eine erste Länge L1. Die Basis 18 weist eine Breite B auf und erstreckt sich in der Längsrichtung 12 über eine zweite Länge L2, die kleiner ist als die erste Länge L1.

Die Basis 18 ist streifenförmig ausgebildet, wobei sich die Breite B des Streifens quer zur Längsrichtung 12 erstreckt. In der im rechten Teil der Fig. 2 dargestellten Ansicht von oben erkennt man, dass die Basis 18 insgesamt trapezförmig ist. An ihren seitlichen Enden ist die Basis 18 mit mittleren Längsabschnitten 20 der Finnen 16 verbunden. Im Beispiel der Fig. 2 ist die Basis 18 eben. An ihrer Unterseite weist sie eine der Oberfläche 14 zugewandte, ebenfalls ebene Befestigungsfläche auf. Zwischen der Befestigungsfläche und der Oberfläche 14 ist ein doppelseitiges Klebeband 34 angeordnet.

Die Finnen 16 weisen eine Höhe H auf, die an ihrem hinteren Ende größer ist als an ihrem vorderen Ende. Vor dem mittleren Längsabschnitt 20 ist ein vorderer Längsabschnitt 22 angeordnet, der nicht unmittelbar mit der Basis 18 verbunden ist. Hinter dem mittleren Längsabschnitt 20 ist ein hinterer Längsabschnitt 24 angeordnet, der ebenfalls nicht unmittelbar mit der Basis 18 verbunden ist. Die drei Längsabschnitte 20, 22, 24 der Finnen 16 sind jeweils in einer Ebene angeordnet, die senkrecht zur Basis bzw. zu Oberfläche 14 des Windenergieanlagenrotorblatts ausgerichtet ist und in einem Winkel α zur Längsrichtung 12.

Im rechten Teil der Fig. 2 erkennt man, dass der Vortex-Generator 10 spiegelsymmetrisch zu einer Längsachse 26 ausgebildet ist. Dies gilt insbesondere für die Anordnung der beiden Finnen 16.

Der vordere Längsabschnitt 22 weist eine untere Kante 28 auf. Der mittlere Längsabschnitt 20 weist eine untere Kante 30 auf, an der die Finne 16 in die Basis 18 übergeht. Der hintere Längsabschnitt 24 weist eine untere Kante 32 auf. Die unteren Kanten 28, 30, 32 sind im Ausführungsbeispiel der Fig. 2 in gerader Linie aneinandergereiht.

Der Vortex-Generator 10 aus Fig. 3 entspricht weitgehend demjenigen aus Fig. 2. Einziger Unterschied ist, dass die vorderen Längsabschnitte 22 und die hinteren Längsabschnitte 24 der Finnen 16 jeweils einen Randabschnitt 36 aufweisen, der sich ausgehend von der betreffenden unteren Kante 28 bzw. 32 des jeweiligen Längsabschnitts 22, 24 nach innen erstreckt. Diese Randabschnitte 36 sind in derselben Ebene angeordnet wie die Basis 18.

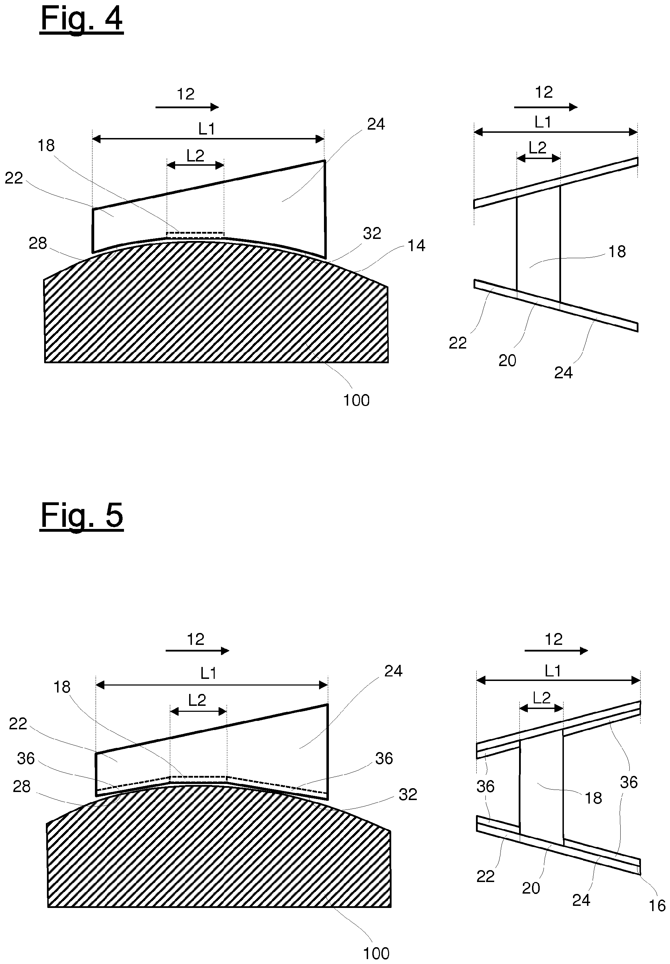

Der Vortex-Generator 10 aus Fig. 4 entspricht ebenfalls weitgehend demjenigen aus Fig. 2. Einziger Unterschied ist, dass die unteren Kanten 28 bzw. 32 der vorderen Längsabschnitte 22 und der hinteren Längsabschnitte 24 der Finnen 16 gekrümmt sind. Sie verlaufen in annähernd gleichmäßigem Abstand von der Oberfläche 14. Diese unteren Kanten 28, 32 stehen nach unten über die Basis 18 über.

Der Vortex-Generator 10 aus Fig. 5 entspricht weitgehend demjenigen aus Fig. 3. Einziger Unterschied ist, dass die unteren Kanten 28, 32 des vorderen Längsabschnitts 22 bzw. des hinteren Längsabschnitts 24 der Finnen 16 ähnlich wie bei dem Vortex-Generator 10 aus Fig. 4 nach unten über die Basis 18 überstehen. Im Gegensatz zu dem Vortex-Generator 10 aus Fig. 4 verlaufen sie jedoch geradlinig.

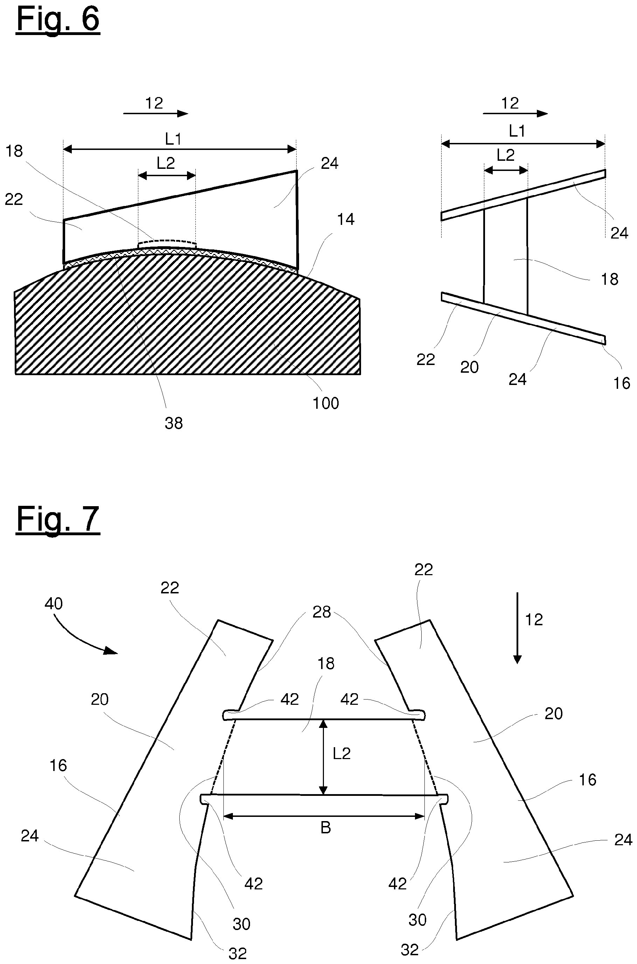

Der Vortex-Generator 10 aus Fig. 6 entspricht weitgehend demjenigen aus Fig. 4. Einziger Unterschied ist, dass hier nicht nur die unteren Kanten 28, 32 des vorderen Längsabschnitts 22 bzw. des hinteren Längsabschnitts 24 der Finnen 16 gekrümmt sind, sondern dass auch die Basis 18 eine Krümmung aufweist. Diese Krümmung der Basis 18 entspricht einer mittleren Krümmung der Oberfläche 14 des Windenergieanlagenrotorblatts. Außerdem ist eine Versiegelung 38 eingezeichnet, die einen Freiraum zwischen den Kanten des Vortex-Generators 10 und der Oberfläche 14 ausfüllt.

Fig. 7 zeigt ein Stanzteil 40 aus Stahlblech, das eine Basis 18 und zwei Finnen 16 aufweist. Mittlere Längsabschnitte 20 der Finnen 16 gehen an den gestrichelten Linien, deren Verlauf den unteren Kanten 30 der mittleren Längsabschnitte 20 entspricht, in die Basis 18 über. Es ist vorgesehen, die Finnen 16 entlang der gestrichelten Linien relativ zu der Basis 18 abzuwinkeln. Die unteren Kanten 28 bzw. 32 der vorderen Längsabschnitte 22 und hinteren Längsabschnitte 24 der Finnen 16 sind gekrümmt, sodass durch dieses Aufrichten der Finnen 16 ein Vortex-Generator 10 mit einer Form gemäß Fig. 4 entsteht. Zwischen den mittleren Längsabschnitten 20 und den jeweils angrenzenden, vorderen bzw. hinteren Längsabschnitten 22, 24 weist das Stanzteil 40 Aussparungen 42 auf. Diese Aussparungen 42 erstrecken sich in die Ebene der Finnen 16 hinein.

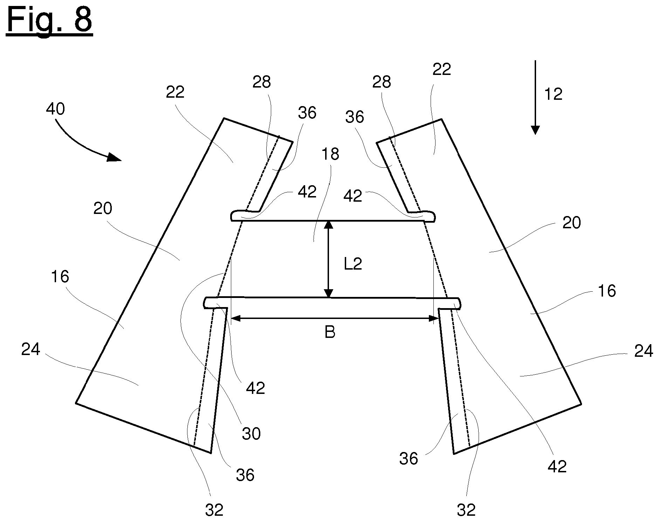

Bei dem Stanzteil 40 aus Fig. 8 sind die unteren Kanten 28, 32 der vorderen Längsabschnitte 22 bzw. der hinteren Längsabschnitte 24 der Finnen 16 geradlinig ausgebildet. An diese unteren Kanten 28, 32 grenzen Randabschnitte 36 an, die relativ zur Ebene der Längsabschnitte 22, 24 nach innen oder nach außen abgewinkelt werden können. Werden sie nach innen abgewinkelt, entsteht dabei ein Vortex-Generator 10, dessen Form dem Vortex-Generator 10 aus Fig. 5 entspricht.

### Liste der Bezugszeichen:

- 10: Vortex-Generator
- 12: Längsrichtung
- 14: Oberfläche
- 16: Finne
- 18: Basis
- 20: mittlerer Längsabschnitt
- 22: vorderer Längsabschnitt
- 24: hinterer Längsabschnitt
- 26: Längsachse
- 28: untere Kante des vorderen Längsabschnitts 22
- 30: untere Kante des mittleren Längsabschnitts 20
- 32: untere Kante des hinteren Längsabschnitts 24
- 34: doppelseitiges Klebeband
- 36: Randabschnitt
- 38: Versiegelung
- 40: Stanzteil
- 42: Aussparung
- 100: Windenergieanlagenrotorblatt
- 106: Rotorblattwurzelbereich
- 107: Übergangsbereich
- 108: Profilbereich
- 109: Druckseite
- 110: Saugseite
- 111: Längserstreckungsrichtung
- L1: erste Länge
- L2: zweite Länge
- B: Breite

## Patentansprüche

1. Vortex-Generator (10) mit einer Längsrichtung (12), zwei Finnen (16), die jeweils in einem Winkel α zu der Längsrichtung (12) angeordnet sind und sich in der Längsrichtung (12) über eine erste Länge L1 erstrecken, und einer Basis (18), die die beiden Finnen (16) miteinander verbindet, wobei die Basis (18) eine Breite B aufweist und sich in der Längsrichtung (12) über eine zweite Länge L2 erstreckt, **dadurch gekennzeichnet, dass** über die gesamte Breite B der Basis (18) die zweite Länge L2 höchstens 70% der ersten Länge L1 beträgt.

2. Vortex-Generator (10) nach Anspruch 1, **dadurch gekennzeichnet, dass** die Basis (18) eine Befestigungsfläche (19) zur Verklebung mit einer Oberfläche (14) eines Windenergieanlagenrotorblatts aufweist.

3. Vortex-Generator (10) nach Anspruch 1 oder 2, **dadurch gekennzeichnet, dass** die Befestigungsfläche (18) in der Längsrichtung (12) eine Krümmung aufweist.

4. Vortex-Generator (10) nach einem der Ansprüche 1 bis 3, **dadurch gekennzeichnet, dass** die Finnen (16) jeweils einen mittleren Längsabschnitt (20) aufweisen, dessen untere Kante (30) mit der Basis (18) verbunden ist, sowie einen vorderen Längsabschnitt (22), der in der Längsrichtung (12) vor der Basis (18) angeordnet ist, und einen hinteren Längsabschnitt (24), der in der Längsrichtung (12) hinter der Basis (18) angeordnet ist.

5. Vortex-Generator (10) nach Anspruch 4, **dadurch gekennzeichnet, dass** der vordere Längsabschnitt (22) in einer Ebene angeordnet ist und eine untere Kante (28) aufweist, die nach unten über die Basis (18) übersteht und/oder dass der hintere Längsabschnitt (24) in einer Ebene angeordnet ist und eine untere Kante (32) aufweist, die nach unten über die Basis (18) übersteht.

6. Vortex-Generator (10) nach Anspruch 4 oder 5, **dadurch gekennzeichnet, dass** die untere Kante (28) des vorderen Längsabschnitts (22) und/oder die untere Kante (32) des hinteren Längsabschnitts (24) gekrümmt ist.

7. Vortex-Generator (10) nach einem der Ansprüche 4 bis 6, **dadurch gekennzeichnet, dass** die untere Kante (28) des vorderen Längsabschnitts (22) und/oder die untere Kante (32) des hinteren Längsabschnitts (24) in einem Winkel zu der unteren Kante (30) des mittleren Längsabschnitts (20) angeordnet ist.

8. Vortex-Generator (10) nach einem der Ansprüche 1 bis 7, **dadurch gekennzeichnet, dass** ein vorderer Längsabschnitt (22) und/oder ein hinterer Längsabschnitt (24) einer Finne an seiner unteren Kante (28, 32) einen abgewinkelten Randabschnitt (36) aufweist.

9. Vortex-Generator (10) nach einem der Ansprüche 1 bis 8, **dadurch gekennzeichnet, dass** der Vortex-Generator (10) durch Ausstanzen eines Flachmaterials und anschließendes Abwinkeln der beiden Finnen (16) relativ zu der Basis (18) hergestellt ist.

10. Vortex-Generator (10) nach einem der Ansprüche 1 bis 9, **dadurch gekennzeichnet, dass** ein doppelseitiges Klebeband (34) auf die Befestigungsfläche aufgeklebt ist.

11. Vortex-Generator (10) nach Anspruch 10, **dadurch gekennzeichnet, dass** sich das doppelseitige Klebeband (34) in der Längsrichtung (12) über die gesamte Breite der Befestigungsfläche bzw. der Basis und/oder über die gesamte zweite Länge L2 erstreckt.

12. Windenergieanlagenrotorblatt (100) mit einem Vortex-Generator (10) nach einem der Ansprüche 1 bis 11, dessen Befestigungsfläche mit einer Oberfläche (14) des Windenergieanlagenrotorblatts verklebt ist.

13. Windenergieanlagenrotorblatt (100) nach Anspruch 12, **dadurch gekennzeichnet, dass** zwischen der Oberfläche (14) und an die Oberfläche (14) angrenzenden Kanten des Vortex-Generators (10) eine Versiegelung (38) angeordnet ist.

14. Windenergieanlagenrotorblatt (100) nach Anspruch 12 oder 13, **dadurch gekennzeichnet, dass** mehrere, identisch geformte Vortex-Generatoren (10) an verschiedenen Positionen der Oberfläche (14), an denen die Oberfläche (14) unterschiedliche Krümmungen aufweist, mit der Oberfläche (14) verklebt sind.

## Claims

1. A vortex generator (10) having a longitudinal direction (12), two fins (16), which are each arranged at an angle α in relation to the longitudinal direction (12) and extend over a first length L1 in the longitudinal direction (12), and a base (18), which connects the two fins (16) to each other, the base (18) having a width B and extending over a second length L2 in the longitudinal direction (12), wherein the second length L2 is not more than 70 % of the first length L1. over the entire width B of the base (18).

2. The vortex generator (10) as claimed in claim 1, wherein the base (18) has a fastening face (19) for bonding to a surface (14) of a wind turbine rotor blade.

3. The vortex generator (10) as claimed in claim 1 or 2, wherein the fastening face (18) has a curvature in the longitudinal direction (12).

4. The vortex generator (10) as claimed in any one of claims 1 to 3, wherein the fins (16) each have a middle longitudinal portion (20), the lower edge (30) of which is connected to the base (18), and a front longitudinal portion (22), which is arranged in front of the base (18) in the longitudinal direction (12), and a rear longitudinal portion (24), which is arranged behind the base (18) in the longitudinal direction (12).

5. The vortex generator (10) as claimed in claim 4, wherein the front longitudinal portion (22) is arranged in a plane, and has a lower edge (28) that projects downward over the base (18), and/or the rear longitudinal portion (24) is arranged in a plane, and has a lower edge (32) that projects downward over the base (18).

6. The vortex generator (10) as claimed in claim 4 or 5, wherein the lower edge (28) of the front longitudinal portion (22) and/or the lower edge (32) of the rear longitudinal portion (24) is curved.

7. The vortex generator (10) as claimed in any one of claims 4 to 6, wherein the lower edge (28) of the front longitudinal portion (22) and/or the lower edge (32) of the rear longitudinal portion (24) is arranged at an angle in relation to the lower edge (30) of the middle longitudinal portion (20).

8. The vortex generator (10) as claimed in any one of claims 1 to 7, wherein a front longitudinal portion (22) and/or a rear longitudinal portion (24) of a fin has an angled peripheral portion (36) at its lower edge (28, 32).

9. The vortex generator (10) as claimed in any one of claims 1 to 8, wherein the vortex generator (10) is produced by stamping out a flat material, and then bending the two fins (16) at an angle relative to the base (18).

10. The vortex generator (10) as claimed in any one of claims 1 to 9, wherein a double-sided adhesive tape (34) is stuck onto the fastening face.

11. The vortex generator (10) as claimed in claim 10, wherein the double-sided adhesive tape (34) extends over the entire width of the fastening face, or of the base, and/or over the entire second length, in the longitudinal direction (12).

12. A wind turbine rotor blade (100) having a vortex generator (10) as claimed in any one of claims 1 to 11, the fastening face of which is adhesive-bonded to a surface (14) of the wind turbine rotor blade.

13. The wind turbine rotor blade (100) as claimed in claim 12, wherein a sealing (38) is arranged between the surface (14) and edges of the vortex generator (10) that adjoin the surface (14).

14. The wind turbine rotor blade (100) as claimed in claim 12 or 13, wherein a plurality of identically shaped vortex generators (10) are adhesive-bonded to the surface (14), at different positions of the surface (14) at which the surface (14) has differing curvatures.

## Revendications

1. Générateur de vortex (10) comprenant une direction longitudinale (12), deux ailettes (16) disposées respectivement selon un angle α par rapport à la direction longitudinale (12) et s'étendant dans la direction longitudinale (12) sur une première longueur L1, et une base (18) reliant les deux ailettes (16) entre elles, dans lequel la base (18) présente une largeur B et s'étend dans la direction longitudinale (12) sur un deuxième longueur L2, **caractérisé en ce que** sur toute la largeur B de la base (18), la deuxième longueur L2 mesure au maximum 70% de la première longueur L1.

2. Générateur de vortex (10) selon la revendication 1, **caractérisé en ce que** la base (18) présente une surface de fixation (19) destinée à être collée à une surface (14) d'une pale de rotor d'éolienne.

3. Générateur de vortex (10) selon la revendication 1 ou 2, **caractérisé en ce que** la surface de fixation (19) présente une incurvation dans la direction longitudinale.

4. Générateur de vortex (10) selon l'une des revendications 1 à 3, **caractérisé en ce que** les ailettes (16) présentent respectivement une section longitudinale du milieu (20), dont le bord inférieur (30) est relié à la base (18), ainsi qu'une section longitudinale avant (22) disposée devant la base (18) dans la direction longitudinale (12), et une section longitudinale arrière (24) disposée derrière la base (18) dans la direction longitudinale (12).

5. Générateur de vortex (10) selon la revendication 4, **caractérisé en ce que** la section longitudinale avant (22) est disposée dans un plan et présente un bord inférieur (28) faisant saillie vers le bas au-delà de la base (18) et/ou **en ce que** la section longitudinale arrière (24) est disposée dans un plan et présente un bord inférieur (32) faisant saillie vers le bas au-delà de la base (18).

6. Générateur de vortex (10) selon la revendication 4 ou 5, **caractérisé en ce que** le bord inférieur (28) de la section longitudinale avant (22) et/ou le bord inférieur (32) de la section longitudinale arrière (24) est/sont incurvé(s).

7. Générateur de vortex (10) selon l'une des revendications 4 à 6, **caractérisé en ce que** le bord inférieur (28) de la section longitudinale avant (22) et/ou le bord inférieur (32) de la section longitudinale arrière (24) est/sont disposé(s) selon un angle par rapport au bord inférieur (30) de la section longitudinale du milieu (20).

8. Générateur de vortex (10) selon l'une des revendications 1 à 7, **caractérisé en ce qu'**une section longitudinale avant (22) et/ou une section longitudinale arrière (24) d'une ailette présente/présentent une section de bord coudée (36) au niveau de son bord inférieur (28, 32).

9. Générateur de vortex (10) selon l'une des revendications 1 à 8, **caractérisé en ce que** le générateur de vortex (10) est fabriqué par découpage d'un matériau plat, puis par coudage des deux ailettes (16) par rapport à la base (18).

10. Générateur de vortex (10) selon l'une des revendications 1 à 9, **caractérisé en ce qu'**un ruban adhésif double face (34) est collé sur la surface de fixation.

11. Générateur de vortex (10) selon la revendication 10, **caractérisé en ce que** le ruban adhésif double face (34) s'étend dans la direction longitudinale (12) sur toute la largeur de la surface de fixation ou de la base et/ou sur l'ensemble de la deuxième longueur L2.

12. Pale de rotor d'éolienne (100) avec un générateur de vortex (10) selon l'une des revendications 1 à 11, dont la surface de fixation est collée à une surface (14) de la pale de rotor d'éolienne.

13. Pale de rotor d'éolienne (100) selon la revendication 12, **caractérisée en ce qu'**un scellage (38) est disposé entre la surface (14) et des bords du générateur de vortex (10) adjacents à la surface (14).

14. Pale de rotor d'éolienne (100) selon la revendication 12 ou 13, **caractérisée en ce que** plusieurs générateurs de vortex (10) formés de manière identique sont collés à la surface (14) à différentes positions de la surface (14) auxquelles la surface (14) présente des incurvations différentes.
